(19) Europäisches Patentamt
European Patent Office
Office européen des brevets

(11) EP 4 123 751 A1

(12) EUROPEAN PATENT APPLICATION

(43) Date of publication:
**25.01.2023 Bulletin 2023/04**

(21) Application number: **22182575.5**

(22) Date of filing: **01.07.2022**

(51) International Patent Classification (IPC):
***H01M 4/13*** *(2010.01)* ***H01M 4/139*** *(2010.01)*
***H01M 50/403*** *(2021.01)* ***H01M 50/431*** *(2021.01)*
***H01M 50/443*** *(2021.01)* ***H01M 50/446*** *(2021.01)*
***H01M 50/414*** *(2021.01)* ***H01M 50/46*** *(2021.01)*

(52) Cooperative Patent Classification (CPC):
**H01M 4/13; H01M 4/139; H01M 50/403; H01M 50/414; H01M 50/431; H01M 50/443; H01M 50/446; H01M 50/46;** H01M 10/052

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.07.2021 JP 2021119480**

(71) Applicant: **Ricoh Company, Ltd.**
**Tokyo 143-8555 (JP)**

(72) Inventors:
- **Nose, Daisuke**
  **Tokyo, 143-8555 (JP)**
- **Kanno, Yusuke**
  **Tokyo, 143-8555 (JP)**
- **Higashi, Ryuji**
  **Tokyo, 143-8555 (JP)**
- **Matsuoka, Kohji**
  **Tokyo, 143-8555 (JP)**
- **Ohmura, Tomoya**
  **Tokyo, 143-8555 (JP)**

(74) Representative: **Marks & Clerk LLP**
**15 Fetter Lane**
**London EC4A 1BW (GB)**

# (54) LIQUID COMPOSITION, POROUS FILM, ELECTRODE, AND POWER STORAGE ELEMENT

(57) A liquid composition containing particles and a dispersion medium is provided, in which a variation coefficient determined by dividing a standard deviation of an area ratio of the particles in an arbitrary cross section of the liquid composition by an average value of the area ratio is 0.07 or larger.



Processed by Luminess, 75001 PARIS (FR)

## Description

BACKGROUND

Technical Field

The present disclosure relates to a liquid composition, a porous film, an electrode, and a power storage element.

Description of the Related Art

In recent years, smartphones and laptop computers have become widespread in everyday life, and electric vehicles without internal-combustion engines are beginning to attract attention throughout the world in the hope of decarbonized society. As the performance and functionality of these electronic appliances have been promoted, capacities and output powers of lithium ion secondary batteries (hereafter referred to as "lithium ion batteries" in some cases) installed in the electronic appliances are becoming increasingly enhanced, but meanwhile, there have been issues of lowered safety due to heat and ignition.

This is because a micro short circuit is caused inside the lithium ion battery for some reason, and a resulting heat causes a separator as a partition to shrink. Thus, plans are now devised, for example, separators or electrodes are coated with high heat-resistant particles such as ceramic particles, so that an interface short circuit between the electrodes is suppressed even if the separator shrinks (e.g. see Japanese Patent No. 3371301).

However, when separators and electrodes are coated with ceramic particles, although the battery safety is improved, battery characteristics such as output characteristics and cycle life are deteriorated.

SUMMARY

An object of the present invention is to provide a liquid composition capable of preparing a lithium ion battery that achieves both good battery characteristics and safety.

Embodiments of the present invention provide a liquid composition containing particles and a dispersion medium, in which a variation coefficient determined by dividing a standard deviation of an area ratio of the particles in an arbitrary cross section of the liquid composition by an average value of the area ratio is 0.07 or larger.

Embodiments of the present invention provide a liquid composition capable of preparing a lithium ion secondary battery that achieves both good battery characteristics and safety.

DETAILED DESCRIPTION

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

An embodiment of the present invention will be explained below.

<Liquid Composition>

A liquid composition according to the present embodiment contains particles and a dispersion medium.

The particles refer to a solid with a relatively small particle diameter. The dispersion medium refers to a medium in which the particles are dispersed. The particles have low solubility in the dispersion medium, e.g. a solubility of the particles in the dispersion medium is lower than 0.1% by mass.

A material constituting the particles is an insulating material, e.g. with a resistivity of $10^{10}$ $\Omega\cdot$cm or higher.

From the viewpoint of heat resistance, the particles are preferably inorganic oxide particles. In addition, from the viewpoint of mechanical strength and the like, among inorganic oxides, aluminum oxides (alumina) and zirconium oxide (zirconia) are more preferable. In addition, from the viewpoint of supply stability and cost, aluminum oxides are even more preferable, and above all, from the viewpoint of chemical stability, $\alpha$-alumina is still even more preferable.

From the viewpoint of providing flame retardancy to the particles, the particles are preferably inorganic phosphate particles. Furthermore, from the viewpoint of providing a function of expanding a distance between the electrodes by foaming at a high temperature, aluminum phosphite is more preferable among inorganic phosphates.

An average diameter of the particles is preferably 50 nm to 1000 nm from the viewpoint of dispersion stability,

more preferably 50 nm to 800 nm from the viewpoint of storage stability of the liquid composition, even more preferably 100 nm to 600 nm from the viewpoint of improving discharge characteristics in forming a porous film described later by discharging the liquid composition according to an inkjet method.

Herein, the average particle diameter refers to an average primary particle diameter (D50) when a volumetric integrated percentage in a particle size distribution determined according to a laser diffraction scattering method is 50%.

If the average particle diameter of the particles is smaller than 50 nm, surface areas of the particles increase and the particles are more likely to agglomerate. In this regard, the average particle diameter of the particles is preferably 50 nm or larger. If the average particle diameter of the particles is larger than 1000 nm, weights of the particles themselves increase, and sedimentation is more likely to occur. In this regard, the average particle diameter of the particles is preferably 1000 nm or smaller.

A shape of the particles is not limited, and examples of the shape may include a rectangular shape, a spherical shape, an elliptical shape, a columnar shape, an egg shape, and an irregular amorphous shape such as a dog-bone shape and a tetrapod shape. The particles may be in a fibrous form.

The variation coefficient can be adjusted depending on the particle shape. If the shape of the particles is distorted, the variation coefficient can be increased. In this regard, the particle shape is preferably rectangular, amorphous, or fibrous. The shape of particles suitable for the inkjet method is preferably rectangular or amorphous.

The dispersion medium used in the liquid composition according to this embodiment is an aqueous or non-aqueous dispersion medium.

The dispersion medium can be arbitrarily selected according to media to be absorbed, such as particles and active material layers for use.

The variation coefficient can be adjusted depending on the polarity or hydrophilicity of the dispersion medium.

The aqueous dispersion medium is not particularly limited, and examples of the aqueous dispersion medium may include water, and a mixture of water and a polar solvent. Examples of the polar solvent may include methanol, ethanol, propanol, butanol, pentanol, hexanol, ethylene glycol, hexylene glycol, N-methylpyrrolidone (NMP), N,N-dimethyl sulfoxide (DMSO), N,N-dimethylformamide (DMF), acetone, and tetrahydrofuran (THF). Each of the polar solvents may be used alone or in combination of two or more types.

The non-aqueous dispersion medium is not particularly limited, and examples of the non-aqueous dispersion medium may include styrene, toluene, xylene, methyl ethyl ketone, ethyl acetate, ethyl lactate, acetone, methanol, ethanol, n-propanol, isopropanol (IPA), n-butanol, isobutanol, tert-butanol, n-pentanol, n-hexanol, diacetone alcohol, DMSO, NMP, THF, and hexylene glycol.

Each of the non-aqueous dispersion media may be used alone or in combination of two or more types.

The liquid composition according to this embodiment is considered to form a structure of the particles in the liquid. To control the structure of the particles, it is considered that repulsion between the particles should be controlled, and an action range of an electric double layer between the particles should be narrowed (i.e. zeta potential is made closer to 0).

Thus, the lower the polarity of the solvent is, the better the solvent works, and it is preferable that such a solvent is a non-aqueous dispersion medium.

The liquid composition according to this embodiment has a variation coefficient of 0.07 or larger when the variation coefficient is defined as a value determined by dividing a standard deviation of an area ratio of the particles in an arbitrary cross section of the liquid composition by an average value of the area ratio.

The variation coefficient refers to a coefficient that represents a dispersed state of the particles in the liquid composition, meaning that as the coefficient value is increased, unevenness of the particle dispersion is increased in an arbitrary cross section of the liquid composition.

The variation coefficient can be expressed by the following equation.

$$\text{Variation coefficient} = \frac{\text{Standard deviation of area ratio of particles in arbitrary cross section of liquid composition}}{\text{Average value of area ratio of particles in arbitrary cross section of liquid composition}}$$

Specifically, the variation coefficient is a value obtained by the following process: an arbitrary cross section of the liquid composition is divided into 20 squares of 10.7 $\mu m \times 10.7$ $\mu m$, a standard deviation of an area ratio of the particles in each square is divided by an average value. The way of dividing into the squares for the variation coefficient is not limited as long as the squares do not overlap with each other. For example, the squares are not necessarily adjacent to each other.

Herein, the arbitrary cross section refers to a square obtained by dividing a film prepared by a freeze-replica

method into the aforementioned ranges (10.7 μm×10.7 μm).

In the freeze-replica method, a carbon film is formed on a sectioned face of the quick-frozen liquid composition to transfer a shape of the sectioned face to the carbon film. In the freeze-replica method, the structure of the carbon film can be directly observed without disrupting the dispersed state even in a liquid composition with a high particle concentration, by using an electron microscope or the like.

A procedure for calculating the variation coefficient of the liquid composition will be explained below.

A container previously filled with the liquid composition is placed in an ultrasonic cleaning machine (model: ASU-2, output power: 40 W, oscillatory frequency: 42 kHz), the liquid composition is dispersed with an ultrasonic wave for 10 minutes. The liquid composition is separated from the container, 1 μL of the liquid composition is dripped onto a metal sample stand, which is then immersed in liquid nitrogen and frozen thoroughly. In case the frozen liquid melts, within 30 seconds, the frozen liquid composition is introduced into a freeze sectioning device, and sectioned under the following conditions.

Then a carbon film is vapor-deposited on the sectioned face in the same device to prepare a replica film (film thickness: about 30 nm). Subsequently, the replica film is immersed in a dispersion medium to be used for the liquid composition so that the replica film is floated on the liquid surface, and the replica film is scooped with a grid for a transmission electron microscope (TEM). The replica film is allowed to stand at room temperature for one day or longer until thoroughly dried, then the replica film is introduced into the transmission electron microscope (TEM) for observation under the following conditions.

Freeze sectioning device: EM-19500 JFDII (manufactured by JEOL Ltd.)

Processing conditions: sectioning temperature=-130°C, chamber pressure= $1.0\times10^{-5}$ Pa

Transmission electron microscope: JEM-2100F (manufactured by JEOL Ltd.)

Observation conditions: acceleration voltage=200 kV, bright field image, detector=CCD camera, observation magnification=2000x

For the TEM-observed image of the replica film, an appropriate threshold value that allows extraction of only the particle portion is set to binarize the image. The way of determining the threshold value is not particularly limited, and the threshold value is determined preferably by a mechanical algorithm involving no subjectivity of an operator, for example, more preferably by Otsu's method or machine learning.

The number of pixels in the particle portion is measured from the binarized image, and an area ratio of the particles in the entire image is calculated. This procedure is applied to 20 images observed, and variation coefficients are calculated according to the above equation.

The variation coefficient obtained in this way is in a range of 0.070 or larger as described above from the viewpoint of correlation with a porosity, preferably 0.079 or larger from the viewpoint of improving the output characteristics, more preferably 0.090 or larger.

In the liquid composition according to this embodiment, the volumetric solid content of the particles is preferably 7% by volume or more.

Herein, the volumetric solid content refers to a value obtained by the following process: the liquid composition is heated and dried until thoroughly dried and solidified, the weight of the dried solid composition is measured to calculate a gravimetric solid content, and then the gravimetric solid content is converted into the volumetric solid content using a specific gravity of the material. There is a tendency that the higher the value of the volumetric solid content is, the narrower the distance between the particles is, and the greater the dispersion unevenness due to the interaction is.

In this embodiment, from the viewpoint of uniformity of the film formed, the volumetric solid content of the particles is preferably 7.0% by volume or more, more preferably 14.0% by volume or more, depending on the shape of the particles and the type of the solvent in the liquid composition. In addition, from the viewpoint of improving the porosity of the porous film described later, the volumetric solid content is preferably 9.0% by volume or more.

On the other hand, the volumetric solid content of the particles is preferably 28.0% by volume or less from the viewpoint of giving the liquid composition a flowability suitable for a coating film, and preferably 21.0% by volume from the viewpoint of improving a discharge performance in forming a porous film by discharging the liquid composition according to an inkjet method.

Preferably, the liquid composition according to this embodiment further contains a dispersant. In this specification, the dispersant refers to a compound that adsorbs or binds to the surfaces of the particles and has a function of suppressing aggregation of the particles by electrostatic repulsion resulting from Coulomb force and steric hindrance resulting from molecular chains.

The dispersant is not particularly limited, and from the viewpoint of improving the dispersibility of the particles, a dispersant including a polymer-based resin as a component (hereinafter, referred to as "polymer-based dispersant" in some cases) is suitably used.

In this specification, the polymer means a polymer having a number average molecular weight (Mn) of 1,000 to 100,000. Considering the viscosity of the liquid composition, the number average molecular weight (Mn) of the polymer-based dispersant is preferably 1,000 to 10,000, more preferably 1,000 to 5,000.

When using a non-aqueous dispersion medium as a dispersion medium, it is preferable that the polymer-based dispersant contains a resin having an acid anhydride group in the main chain because the acid anhydride group has relatively low reactivity and can be used without significantly affecting battery characteristics. The acid anhydride group can functionally serve as an adsorption group for the particle surface.

Examples of the adsorption group of the polymer-based dispersant may include, in addition to the acid anhydride group, a carboxylic acid ester group, an amide group, an epoxy group, and an ether group.

As the adsorption group of the polymer-based dispersant, above all, the acid anhydride group is preferable in consideration of adsorbability to inorganic particles such as alumina particles, boehmite particles, apatite particles, titanium oxide particles, and silica particles.

A proportion of the polymer-based dispersant to the inorganic particles is preferably 0.1 to 10.0% by mass in terms of dispersibility of the inorganic particles, more preferably 0.1 to 7.0% by mass in terms of viscosity suitable for the inkjet method.

The variation coefficient of the inorganic particles can be adjusted depending on the content of the polymer-based dispersant.

In terms of the variation coefficient, the proportion of the polymer-based dispersant to the inorganic particles is preferably 0.1 to 10.0% by mass, more preferably 0.1 to 7.0% by mass.

As the dispersant according to this embodiment, among polymer-based dispersants, it is more preferable to use a dispersant containing a compound having a polyalkylene chain as a component (hereinafter, referred to as "dispersant having a polyalkylene chain" in some cases) from the viewpoint of further improving the porosity of the porous film formed from the liquid composition.

Preferably, the polymer-based dispersant such as the dispersant having a polyalkylene chain contains any of constitutional units represented by the following general formulas (1) to (5) from the viewpoint of dispersion stability of the liquid composition.

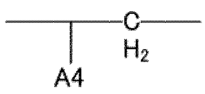

(1)

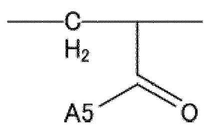

(2)

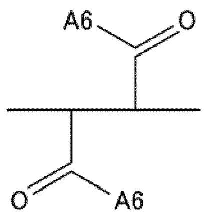

(3)

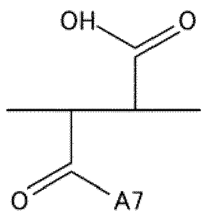

(4)

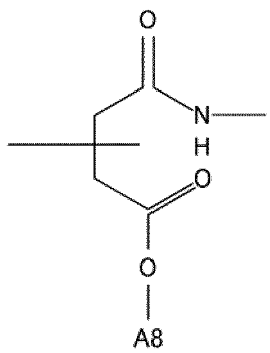

(5)

(wherein, A4 represents a group expressed by -O-R or $-CH_2$-O-R; A5, A6, and A7 each independently represent a group expressed by -OR or -NH-R; R represents a linear or branched hydrocarbon group having 1 to 24 carbon atoms or oligoether group; and A8 represents a linear or branched hydrocarbon group having 1 to 24 carbon atoms or oligoether group).

In the formula, the oligoether group refers to a group whose constitutional unit is an oxyethylene group or an oxypropylene group.

A molecular weight of the oligoether group is preferably 100 to 10,000, more preferably 100 to 5,000. If the molecular weight of the oligoether group is 100 or more, the dispersibility of the polymer dispersant is improved, and if the molecular weight of the oligoether group is 10,000 or less, the viscosity of the liquid composition is less likely to increase.

The oligoether group may have a hydroxyl group, a methoxy group, an ethoxy group, a propoxy group, or the like, at the terminal.

Specific examples of the constitutional units having oligoether groups are presented in the following chemical formulas (6) to (29), but are not limited thereto. In the formulas, n represents a polymerization degree.

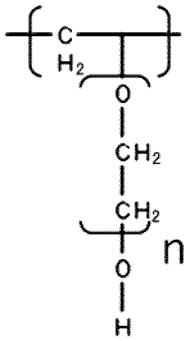

(6)

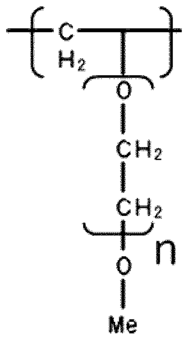

(7)

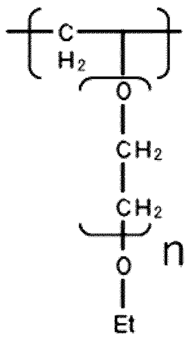

(8)

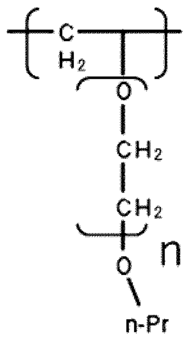

(9)

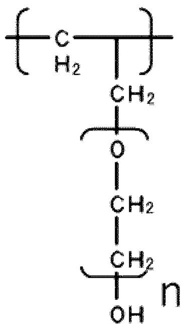

(10)

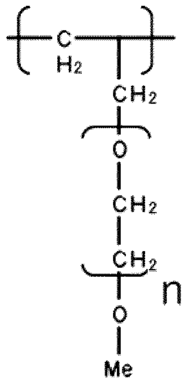

(11)

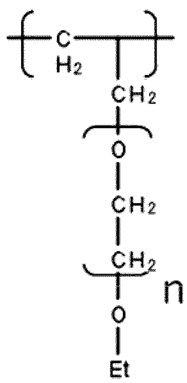

(12)

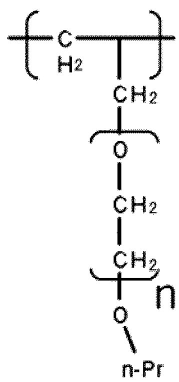

(13)

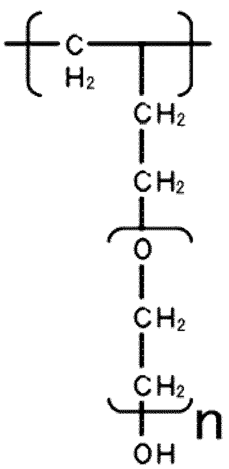

(14)

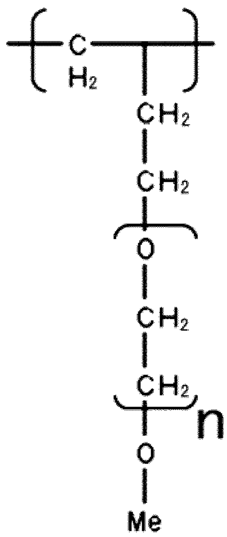

(15)

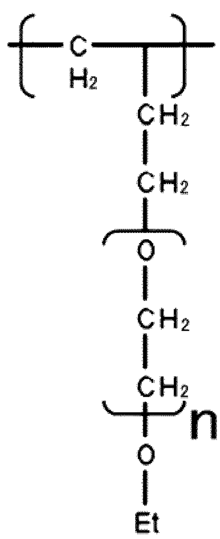

(16)

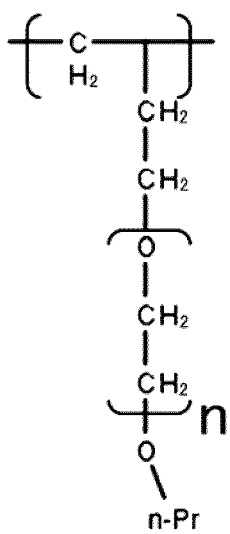

(17)

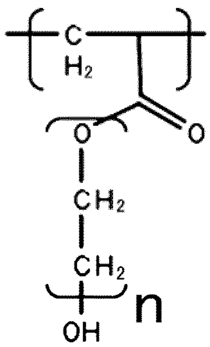

(18)

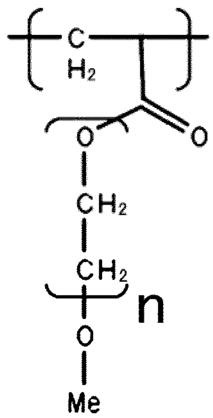

(19)

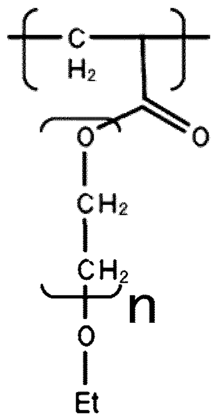

(20)

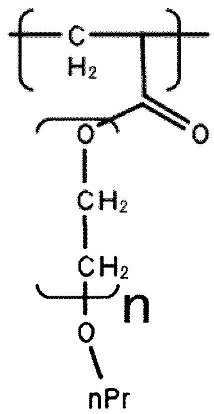

(21)

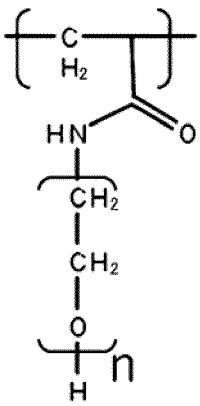

(22)

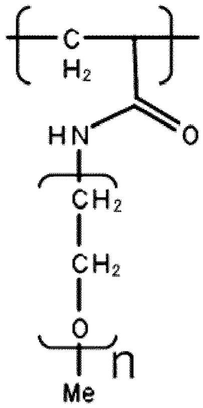

(23)

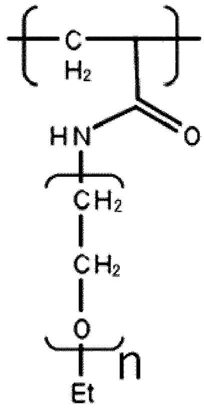

(24)

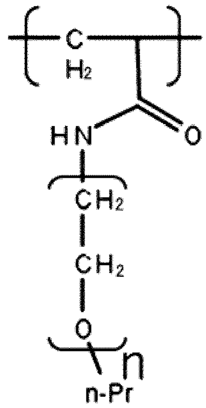

(25)

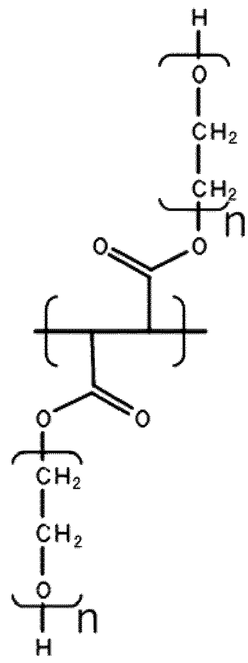

(26)

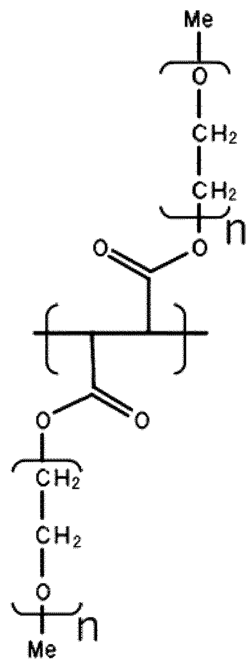

(27)

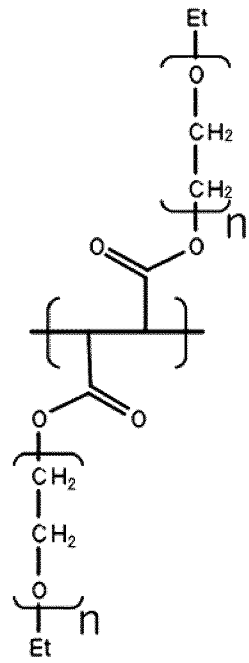

(28)

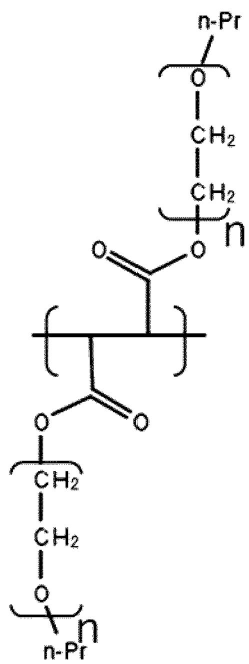

(29)

Use of such a polymer-based dispersant having an oligoether group improves the dispersibility of the liquid composition, even if the liquid composition contains a polar dispersion medium as the dispersion medium.

Examples of the polar dispersion medium may include methanol, ethanol, propanol, butanol, pentanol, hexanol, ethylene glycol, hexylene glycol, NMP, DMSO, DMF, acetone and THF.

This liquid composition according to this embodiment can be produced using a dispersing device.

Examples of the dispersing device may include a stirrer, a ball mill, a bead mill, a ring mill, a high-pressure disperser, a rotary high-speed shearing device and an ultrasonic disperser.

The liquid composition according to this embodiment may be used alone or in combination of a plurality of liquid compositions.

The liquid composition according to this embodiment can be used for forming an electrode insulating layer. Herein, the electrode insulating layer refers to an insulating layer disposed on an electrode. A form of the insulating layer disposed on the electrode is not particularly limited. For example, the insulating layer may be formed as a whole or a part of an electrode composite layer disposed on an electrode, or may be formed as an insulating layer separately from the electrode composite layer. In this embodiment, the electrode insulating layer can be configured as a porous film described below.

The reason why output characteristics deteriorate and cycle life decreases in a battery using separators or electrodes coated with particles of ceramic or the like is because the ceramic particles are deposited while flowing during the drying process of the liquid composition, resulting in a structure close to a closest packing.

The inventors have found that it is possible to reduce the flowability of the liquid composition after coating and to prevent the closest packing in the drying process after coating, by providing dispersion unevenness and an aggregated structure to the particles contained in the liquid composition.

The liquid composition according to this embodiment can be obtained on the basis of this inventor's knowledge, and the particles contained in the liquid composition can acquire the dispersion unevenness and the aggregated structure by using the liquid composition having above a certain variation coefficient that can be controlled depending on the volumetric solid content and shape of the particles and the type of the solvent, as described above. As a result, the flowability of the liquid composition after coating is reduced, and the closest packing can be prevented in the drying process after coating.

Thereby, the output characteristics and cycle life can be improved while maintaining safety of the battery by using the liquid composition according to this embodiment. Thus, according to this embodiment, both good battery characteristics and safety can be achieved.

In addition, since the porosity of the porous film formed from the liquid composition can be improved by adjusting the variation coefficient to 0.09 or larger, and the output characteristics and cycle life of the battery can be further improved by using such a porous film for the battery.

In the liquid composition according to this embodiment, the variation coefficient in the liquid composition is controlled to 0.07 or larger by adjusting the volumetric solid content of the particles, so that a battery with improved output characteristics and cycle life can be obtained while maintaining safety.

When the volumetric solid content of the particles is 9.0% by volume or more, the variation coefficient of the liquid composition can be controlled at 0.07 or larger with high accuracy.

In the liquid composition according to this embodiment, as described above, the affinity with the particle surface can be enhanced (i.e. zeta potential is lowered) by using a non-aqueous dispersion medium as the dispersion medium, and therefore the dispersibility of the particles in the liquid composition can be improved. Even if the liquid composition is used for a battery material that is easy to react with water, good battery characteristics can be obtained by using a non-aqueous dispersion medium as the dispersion medium because the reaction with water is suppressed.

In the liquid composition according to this embodiment, as described above, the dispersibility of the particles in the liquid composition can be further improved by adding the dispersant.

As described above, since the porosity of the porous film formed from the liquid composition can be further improved by using the dispersant having a polyalkylene chain as this dispersant, permeability of lithium ions can be enhanced and the battery characteristics can be improved by using such a porous film for the lithium ion secondary battery.

When inorganic oxide particles are used as particles in the liquid composition according to this embodiment as described above, the heat resistance of the porous film formed from the liquid composition can be enhanced. Thus, use of such a porous film for a battery material can improve battery safety.

In addition, a mechanical strength and the like of the porous film formed from the liquid composition can be enhanced by using alumina as such an inorganic oxide. Thus, use of such a porous film for the battery material can further improve battery safety.

As described above, when inorganic phosphate particles are used as particles in the liquid composition according to this embodiment, flame retardancy of the porous film formed from the liquid composition can be enhanced. Thus, use of such a porous film for the battery material can improve battery safety.

In addition, aluminum phosphite can be used as such an inorganic phosphate to provide a function of expanding a distance between the electrodes by foaming at a high temperature. Thus, use of such a porous film for the battery material can further improve battery safety.

Also, the liquid composition according to this embodiment can be used for forming the electrode insulating layer to provide an insulating porous film between the electrodes and the separators. When such a porous film has flame retardancy, the flame retardancy of an area between the electrode insulating layer and the separators can be enhanced.

<Porous Film>

The porous film according to this embodiment is formed by coating of the aforementioned liquid composition.

The porous film has communicating pores formed mainly due to deposition of the particles. Herein, the communicating pores mean that all pores are connected and have no dead ends (or are not obstructed). It is considered that, since such a porous film is used for a lithium ion battery to improve the permeability of the lithium ions, and therefore an efficient flow of electrolytes in the lithium ion secondary battery is increased, resulting in a good influence on the cycle characteristics and output characteristics.

When the porous film is used in the lithium ion battery, a site where the porous film is formed is not restricted. For example, the porous film can be formed on the separator or the electrode of the lithium ion battery.

A separator in a general lithium ion battery has a shutdown mechanism, and there is a tendency that the separator itself shrinks accompanying shutdown under a heated environment resulting from short circuit or the like. When a porous film is formed on such a separator, short circuit around the electrode due to shrinkage of the separator body cannot be theoretically prevented.

On the other hand, when the porous film is formed on the electrode, the porous film is placed independently of the separator, and therefore short circuit around the electrode can be suppressed even if the separator shrinks. The porous film formed on the electrode tends to be difficult to peel off because of strong bond to the active material layer of the electrode. Thus, it is preferable that the porous film is formed on the electrode.

To obtain the porous film according to this embodiment, specifically the aforementioned liquid composition is applied on a medium to be coated, and dried.

Examples of the liquid composition applying method may include a dip coating method, a spray coating method, a spin coating method, a bar coating method, a slot die coating method, a doctor blade coating method, an offset printing method, a gravure printing method, a flexographic printing method, a letterpress printing method, a screen printing method, a liquid discharging method and an electrophotographic printing method using liquid development. Above all, the liquid discharging method is preferable in that a position to which droplets are discharged can be precisely controlled.

When using the liquid discharging method, the liquid composition is discharged onto the medium to be coated from the liquid discharging head.

Examples of the method for discharging the liquid composition may include a method of providing a mechanical energy to the liquid composition, and a method of applying a thermal energy to the liquid composition. Above all, the method of providing a mechanical energy to the liquid composition is preferable for using a non-aqueous dispersion medium.

When using the liquid discharging method, a known liquid discharging device can be used.

The medium to be coated is a medium (porous body) capable of absorbing the liquid composition according to this embodiment.

Examples of the medium to be coated may include a medium having an ink receptive layer, obtained by coating plain paper or base paper with porous particles. Herein, the term "coating" refers to a process in which the liquid composition is applied on the medium to be coated and then a solvent is removed to form a film. The solvent can be removed by changing the temperature, the pressure, or the like.

When an electrode having an electrode composite layer formed on an electrode substrate described later is used as the medium to be coated, an electrode integrated with a separator, or the like can be produced. Examples of the medium to be coated other than the aforementioned media may include a base layer used for a reflective display element and an electrode layer used in printed electronics.

In the porous film according to this embodiment, the aforementioned liquid composition is used, so that effects that can be obtained with the aforementioned liquid composition can be obtained as they are. Specifically, since the porous film according to this embodiment is formed by coating of the liquid composition, a lithium ion secondary battery using such a porous film can improve output characteristics and cycle life while maintaining safety.

<Electrode>

In the electrode according to this embodiment, the aforementioned porous film is formed on the electrode composite layer.

The electrode has an electrode substrate, an electrode composite layer formed on the electrode base, and a particle layer formed on the electrode composite layer. In addition, the particle layer is made of the aforementioned porous film.

The method for producing the electrode includes a step of forming the electrode composite layer on the electrode substrate and a step of discharging (applying) the liquid composition onto the electrode composite layer to form the particle layer.

The electrode substrate is formed in a sheet shape. As the electrode substrate, copper foil, aluminum foil, or the like can be used.

The electrode composite layer and the particle layer may be formed on one side or both sides of the electrode substrate.

The electrode composite layer contains at least active materials (active material particles).

As the active materials, a positive electrode active material or a negative electrode active material can be used. Note that each of the positive electrode active material and the negative electrode active material may be used alone or in combination of two or more types.

The positive electrode active material is not particularly limited as long as it can reversibly intercalate (occlude) or deintercalate (release) alkali metal ions, and an alkali metal-containing transition metal compound can be used.

Examples of the alkali metal-containing transition metal compound may include lithium-containing transition metal compounds such as a composite oxide containing lithium and one or more elements selected from a group consisting of cobalt, manganese, nickel, chromium, iron, and vanadium.

Examples of the lithium-containing transition metal compound may include lithium cobalt oxide, lithium nickel oxide, and lithium manganese oxide.

As the alkali metal-containing transition metal compound, a polyanionic compound having an $XO_4$ tetrahedron (X represents P, S, As, Mo, W, Si, etc.) in a crystal structure can also be used. Above all, lithium-containing transition metal phosphate compounds such as lithium iron phosphate and lithium vanadium phosphate are preferable in terms of cycle characteristics, and lithium vanadium phosphate is more preferable in terms of lithium diffusion coefficient and output characteristics.

In terms of electron conductivity, it is preferable that the surface of the polyanionic compound is coated with a conductive auxiliary agent such as a carbon material such that the polyanionic compound and the conductive auxiliary agent are combined.

The negative electrode active material is not particularly limited as long as it can reversibly intercalate or deintercalate alkali metal ions, and a carbon material containing graphite having a graphite-type crystal structure can be used.

Examples of the carbon material may include natural graphite, synthetic graphite, poorly-graphitizable carbon (hard carbon), and easily-graphitizable carbon (soft carbon). Examples of the negative electrode active material other

than the carbon materials may include lithium titanate and titanium oxide.

In terms of an energy density of the lithium ion secondary battery, it is preferable to use a high capacity material such as silicon, tin, silicon alloy, tin alloy, silicon oxide, silicon nitride, and tin oxide as the negative electrode active material.

As the conductive auxiliary agent, for example, it is possible to use carbon materials such as conductive carbon black, carbon nanofiber, carbon nanotube, graphene, and graphite particles, which are produced by a furnace method, an acetylene method, a gasification method, or the like. As a conductive auxiliary agent other than carbon materials, for example, it is possible to use particles or fibers of a metal such as aluminum. The conductive auxiliary agent may be combined with the active materials in advance.

In the electrode according to this embodiment, the aforementioned porous film is used, so that effects that can be obtained with the aforementioned porous film can be obtained as they are. Specifically, since the electrode according to this embodiment is configured such that a porous film formed by coating of the liquid composition is formed on the active material layer, output characteristics and cycle life of the lithium ion secondary battery using such an electrode can be improved while maintaining safety.

<Power Storage Element>

The power storage element according to this embodiment has the aforementioned electrode. The power storage element is not limited and can be selected as appropriate depending on an intended purpose. Examples of the power storage element may include a secondary battery such as a lithium ion secondary battery, a magnesium ion secondary battery, a sodium ion secondary battery, and a sodium secondary battery; and a capacitor such as an electric double layer capacitor, a lithium ion capacitor, and a redox capacitor.

As the power storage element, above all, the secondary battery is preferable, the lithium ion secondary battery is more preferable. A configuration of a lithium ion secondary battery will be explained below as an example of the power storage element according to this embodiment.

<Lithium Ion Secondary Battery>

The lithium ion secondary battery according to this embodiment has the aforementioned electrode.

The lithium ion secondary battery (hereinafter, referred to as a lithium ion battery in some cases) is classified as non-aqueous electrolyte batteries in which an ion-conductive lithium salt dissolved in an electrolytic solution such as a non-aqueous solvent is used as an electrolyte solution.

The method for producing the lithium ion secondary battery according to this embodiment includes a step of producing an electrode using the aforementioned electrode producing method.

The configuration of the lithium ion secondary battery according to this embodiment is not particularly limited as long as the battery has the aforementioned electrode. The lithium ion secondary battery has e.g. an electrode element, an electrolyte layer formed on the electrode element, an exterior package that accommodates the electrode element and the electrolyte layer and seals the inside thereof, and a lead wire that is coupled to the electrode element and drawn out of the exterior package.

In the electrode element, negative electrodes and positive electrodes are laminated via separators. The positive electrode is laminated on both sides of the negative electrode. A negative electrode lead wire is coupled to a negative electrode substrate, and a positive electrode lead wire is coupled to a positive electrode substrate.

The negative electrode has a negative electrode active material layer and a particle layer (porous film) that are sequentially formed on both sides of the negative electrode substrate.

The positive electrode has a positive electrode active material layer formed on both sides of the positive electrode substrate. Herein, the positive electrode active material layer and the particle layer (porous film) may be sequentially formed on both sides of the positive electrode substrate. In this case, the particle layer may be omitted as necessary.

The number of laminations of the negative electrodes and the positive electrodes in the electrode element is not particularly limited. The number of the negative electrodes and the number of the positive electrodes in the electrode element may be either the same or different.

The lithium ion battery may have other components as necessary.

The shape of the lithium ion battery is not particularly limited and, for example, may be of a laminate type, a cylinder type in which a sheet electrode and a separator are assembled in a spiral manner, another cylinder type in which a pellet electrode and a separator are combined into an inside-out structure, or a coin type in which a pellet electrode and a separator are laminated.

For the purpose of preventing short circuit between the negative electrodes and the positive electrodes, the separators are provided between the negative electrodes and the positive electrodes as necessary.

Examples of a material of the separators may include paper such as Kraft paper, vinylon mixed paper, and synthetic pulp mixed paper; cellophane; a polyolefin nonwoven fabric such as a polyethylene grafted film and a polypropylene melt-blow nonwoven fabric; a polyamide nonwoven fabric; a glass fiber nonwoven fabric; and a micropore film.

The size of the separator is not particularly limited as long as the separator can be used for lithium ion batteries. The separator may have either a single-layer structure or a laminated structure. When a solid electrolyte described later is used for the electrolyte layer, the separators can be omitted.

The electrolyte layer is made of a non-aqueous electrolyte. In the non-aqueous electrolytic solution, electrolyte salts are dissolved in a non-aqueous solvent. As the non-aqueous electrolyte, a solid electrolyte or a non-aqueous electrolytic solution can be used.

The non-aqueous solvent is not particularly limited. For example, it is preferable to use an aprotic organic solvent. As the aprotic organic solvent, a carbonate-based organic solvent such as a chain carbonate and a cyclic carbonate can be used. Above all, the chain carbonate is preferable because of high ability for dissolving electrolyte salts. Preferably, the aprotic organic solvent has a low viscosity.

Examples of the chain carbonate may include dimethyl carbonate (DMC), diethyl carbonate (DEC), and methyl ethyl carbonate (EMC).

A content of the chain carbonate in the non-aqueous solvent is preferably 50% by mass or more. If the content of the chain carbonate in the non-aqueous solvent is 50% by mass or more, even when the non-aqueous solvent other than the chain carbonate is a cyclic substance (e.g. cyclic carbonate, cyclic ester) having a high dielectric constant, a content of the cyclic substance is small. Thus, even if the non-aqueous electrolytic solution in a concentration as high as 2M or more is prepared, the viscosity of the non-aqueous electrolytic solution decreases, which improves permeation of the non-aqueous electrolytic solution in the electrode, and ion diffusion.

Examples of the cyclic carbonate may include propylene carbonate (PC), ethylene carbonate (EC), butylene carbonate (BC), and vinylene carbonate (VC).

As the non-aqueous solvent other than the carbonate-based organic solvents, for example, it is possible to use an ester-based organic solvent such as a cyclic ester and a chain ester, and an ether-based organic solvent such as a cyclic ether and a chain ether.

Examples of the cyclic ester may include $\gamma$-butyrolactone ($\gamma$-BL), 2-methyl-$\gamma$-butyrolactone, acetyl-$\gamma$-butyrolactone, and $\gamma$-valerolactone.

Examples of the chain ester may include a propionic acid alkyl ester, a malonic acid dialkyl ester, an acetic acid alkyl ester (e.g. methyl acetate (MA), ethyl acetate) and a formic acid alkyl ester (e.g. methyl formate (MF), ethyl formate).

Examples of the cyclic ether may include tetrahydrofuran, alkyltetrahydrofuran, alkoxytetrahydrofuran, dialkoxytetrahydrofuran, 1,3-dioxolan, alkyl-1,3-dioxolan, and 1,4-dioxolan.

Examples of the chain ether may include 1,2-dimethoxyethane (DME), diethyl ether, ethylene glycol dialkyl ether, diethylene glycol dialkyl ether, triethylene glycol dialkyl ether, and tetraethylene glycol dialkyl ether.

The electrolyte salt is not particularly limited as long as it has high ion conductivity and is soluble in a non-aqueous solvent. Preferably, the electrolyte salt contains a halogen atom.

Examples of a cation constituting the electrolyte salt may include lithium ion. That means, a lithium salt can be used as the electrolyte salt. The lithium salt is not particularly limited, and can be selected as appropriate depending on an intended purpose.

Examples of the lithium salt may include lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), lithium bis(trifluoromethylsulfonyl)imide ($LiN(CF_3SO_2)_2$) and lithium bis(pentafluoroethylsulfonyl)imide ($LiN(C_2F_5SO_2)_2$). Above all, $LiPF_6$ is preferable in terms of ion conductivity, and $LiBF_4$ is preferable in terms of stability.

Examples of an anion constituting the electrolyte salt may include $BF_4^-$, $PF_6^-$, $AsF_6^-$, $CF_3SO_3^-$, $(CF_3SO_2)_2N^-$ and $(C_2F_5SO_2)_2N^-$.

Each of these electrolyte salts may be used alone or in combination of two or more types.

The concentration of the electrolyte salt in the non-aqueous electrolytic solution can be selected as appropriate depending on an intended purpose. The concentration of the electrolyte salt is preferably 1 to 2 mol/L in a case of a swing-type lithium ion battery, and preferably 2 to 4 mol/L in a case of a reserve-type lithium ion battery.

The lithium ion secondary battery is not particularly limited in application. For example, the lithium ion secondary battery may be used for laptop computers, pen input personal computers, mobile personal computers, electronic book players, cellular phones, portable facsimile machines, portable copiers, portable printers, headphone stereos, video movie recorders, liquid crystal display televisions, handy cleaners, portable CD players, mini disk players, transceivers, electronic organizers, calculators, memory cards, portable tape recorders, radios, backup power sources, motors, illumination apparatuses, toys, game machines, clocks, electronic flashes, and cameras.

When the power storage element (lithium ion secondary battery) according to this embodiment has the aforementioned electrode, effects that can be obtained with the aforementioned electrode can be obtained as they are. Specifically, since the lithium ion secondary battery according to this embodiment has the electrode in which the porous film formed by coating of the liquid composition is formed on the active material layer, the output characteristics and

cycle life of the lithium ion secondary battery using such an electrode can be improved while maintaining safety.

EXAMPLES

This embodiment will be further explained below with reference to Examples. Note that each of tests and evaluations will be performed according to the following methods.

<Preparation of Replica Film According to Freeze-Replica Method, and Transmission Electron Microscopy>

A container previously filled with the liquid composition was placed in an ultrasonic cleaning machine (model: ASU-2, output power: 40 W, oscillatory frequency: 42 kHz), the liquid composition was dispersed with an ultrasonic wave for 10 minutes. The liquid composition quick-frozen in liquid nitrogen was sectioned in a frozen sample preparing device, and a carbon film was vapor-deposited on the sectioned face in the same device to prepare a replica film.

Subsequently, the replica film is immersed in a dispersion medium to be used for the liquid composition, so that the replica film is floated on the liquid surface, and scooped with a grid for a transmission electron microscope (TEM). The replica film was thoroughly dried and then introduced into the transmission electron microscope (TEM) for observation under the following conditions.

Freeze sectioning device: EM-19500 JFDII (manufactured by JEOL Ltd.)
Processing conditions: sectioning temperature=-130°C, chamber ressure=$1.0\times10^{-5}$ Pa
Transmission electron microscope: JEM-2100F (manufactured by JEOL Ltd.)
Observation conditions: acceleration voltage=200 kV, bright field image, detector=CCD camera, observation magnification=2000x

<Calculation of Variation Coefficient>

An image observed with the transmission electron microscope is read into an image analysis software (Dragonfly, manufactured by Maxnet Co.,Ltd.), particle areas were extracted using a deep learning algorithm, and then a ratio of the particle areas relative to the whole image was calculated. At least 20 images were analyzed per IN of liquid composition, and an average value and a standard deviation of the particle area percentages among the images were calculated. The obtained standard deviation was divided by the average value, and the divided value was defined as a variation coefficient.

<Preparation of Liquid Composition>

Production Examples 1 to 24 of the liquid composition will be described below.

[Production Example 1]

A pre-dispersed liquid was prepared by mixing 14.5% by volume of alumina A as a solid content, 82.7% by volume of a mixed solution of ethyl lactate and hexylene glycol (EL-HG) as a dispersion medium (solvent), and 2.8% by volume of MALIALIM (registered trademark) SC-0708A (manufactured by NOF CORPORATION) as a dispersant.

The alumina A is in a form of a synthesized particle having a primary particle diameter (D50) of 0.7 μm, a specific surface area of 4.5 $g/m^2$ and having a tetrapod shape as one of the amorphous shapes.

This pre-dispersed liquid was put into a container together with zirconia beads (diameter: 2 mm) and dispersed by freeze nano pulverizer NP-100 (manufactured by THINKY CORPORATION) at 1500 rpm for 3 minute to obtain a dispersed liquid. The zirconia beads were removed from the obtained dispersed liquid using a 25 μm mesh filter to prepare a liquid composition. A dispersed state of the particles in this liquid composition was evaluated using a freeze-replica method, and as a result, the liquid composition had a variation coefficient of 0.116.

[Production Example 2]

A pre-dispersed liquid was prepared by mixing 14.5% by volume of alumina B as a solid content, 82.7% by volume of a mixed solution of ethyl lactate and hexylene glycol (EL-HG) as a dispersion medium, and 2.8% by volume of MALIALIM SC-0708A (manufactured by NOF CORPORATION) as a dispersant.

The alumina B is in a form of a pulverized particle having a primary particle diameter (D50) of 0.5 μm and a specific surface area of 7.8 $g/m^2$.

From this pre-dispersed liquid, a liquid composition was prepared in the same procedure as in Production

Example 1. A dispersed state of the particles in this liquid composition was evaluated using the freeze-replica method, and as a result, the liquid composition had a variation coefficient of 0.079.

[Production Example 3]

A pre-dispersed liquid was prepared by mixing 14.5% by volume of alumina C as a solid content, 82.7% by volume of a mixed solution of ethyl lactate and hexylene glycol (EL-HG) as a dispersion medium, and 2.8% by volume of MALIALIM SC-0708A (manufactured by NOF CORPORATION) as a dispersant.
The alumina C is in a form of a pulverized particle having a primary particle diameter (D50) of 0.6 μm and a specific surface area of 5.8 $g/m^2$.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.084.

[Production Example 4]

A pre-dispersed liquid was prepared by mixing 14.5% by volume of an aluminum phosphite as a solid content, 82.7% by volume of a mixed solution of ethyl lactate and hexylene glycol as a dispersion medium, and 2.8% by volume of MALIALIM SC-0708A (manufactured by NOF CORPORATION) as a dispersant.
The aluminum phosphite is in a form of a pulverized particle having a primary particle diameter (D50) of 0.4 μm and a specific surface area of 18.1 $g/m^2$.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.126.

[Production Example 5]

A pre-dispersed liquid was prepared by mixing 14.5% by volume of a styrene particle as a solid content, 82.7% by volume of a mixed solution of ethyl lactate and hexylene glycol (EL-HG) as a dispersion medium, and 2.8% by volume of MALIALIM SC-0708A (manufactured by NOF CORPORATION) as a dispersant.
The styrene particle has a primary particle diameter (D50) of 0.8 μm and a specific surface area of 9.2 $g/m^2$.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.071.

[Production Example 6]

A pre-dispersed liquid was prepared by mixing 14.5% by volume of aluminum nitride as a solid content, 82.7% by volume of a mixed solution of ethyl lactate and hexylene glycol (EL-HG) as a dispersion medium, and 2.8% by volume of MALIALIM SC-0708A (manufactured by NOF CORPORATION) as a dispersant.
Aluminum nitride is in a form of a particle having a primary particle diameter (D50) of 0.9 μm and a specific surface area of 3.2 $g/m^2$.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.073.

[Production Example 7]

A pre-dispersed liquid was prepared by mixing 5.0% by volume of the alumina A as a solid content, 94.0% by volume of a mixed solution of ethyl lactate and hexylene glycol (EL-HG) as a dispersion medium, and 1.0% by volume of MALIALIM SC-0708A (manufactured by NOF CORPORATION) as a dispersant.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.066.

[Production Example 8]

A pre-dispersed liquid was prepared by mixing 9.9% by volume of the alumina A as a solid content, 88.3% by

volume of a mixed solution of ethyl lactate and hexylene glycol (EL-HG) as a dispersion medium, and 1.9% by volume of MALIALIM SC-0708A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.108.

[Production Example 9]

A pre-dispersed liquid was prepared by mixing 20.3% by volume of the alumina A as a solid content, 75.8% by volume of a mixed solution of ethyl lactate and hexylene glycol (EL-HG) as a dispersion medium, and 3.9% by volume of MALIALIM SC-0708A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.120.

[Production Example 10]

A pre-dispersed liquid was prepared by mixing 27.7% by volume of the alumina A as a solid content, 67.0% by volume of a mixed solution of ethyl lactate and hexylene glycol (EL-HG) as a dispersion medium, and 5.3% by volume of MALIALIM SC-0708A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.123.

[Production Example 11]

A pre-dispersed liquid was prepared by mixing 14.5% by volume of the alumina A as a solid content, 82.7% by volume of a mixed solution of dimethylsulfoxide and ethylene glycol (DMSO-EG) as a dispersion medium, and 2.8% by volume of MALIALIM HKM-150A (manufactured by NOF CORPORATION) as a dispersant.

A liquid composition was prepared in the same procedure as in Production Example 1. A dispersed state of the particles in this liquid composition was evaluated using the freeze-replica method, and as a result, the liquid composition had a variation coefficient of 0.105.

[Production Example 12]

A pre-dispersed liquid was prepared by mixing 14.5% by volume of the alumina B as a solid content, 82.7% by volume of a mixed solution of dimethylsulfoxide and ethylene glycol (DMSO-EG) as a dispersion medium, and 2.8% by volume of MALIALIM HKM-150A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.079.

[Production Example 13]

A pre-dispersed liquid was prepared by mixing 14.5% by volume of the alumina C as a solid content, 82.7% by volume of a mixed solution of dimethylsulfoxide and ethylene glycol (DMSO-EG) as a dispersion medium, and 2.8% by volume of MALIALIM HKM-150A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.085.

[Production Example 14]

A pre-dispersed liquid was prepared by mixing 14.5% by volume of an aluminum phosphite as a solid content, 82.7% by volume of a mixed solution of dimethylsulfoxide and ethylene glycol (DMSO-EG) as a dispersion medium, and 2.8% by volume of MALIALIM HKM-150A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method,

and as a result, the liquid composition had a variation coefficient of 0.121.

[Production Example 15]

A pre-dispersed liquid was prepared by mixing 14.5% by volume of the alumina A as a solid content, 82.7% by volume of a mixed solution of diisobutyl ketone and hexylene glycol (DIBK-HG) as a dispersion medium, and 2.8% by volume of MALIALIM AKM-0531 (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.112.

[Production Example 16]

A pre-dispersed liquid was prepared by mixing 14.5% by volume of the alumina A as a solid content, 82.7% by volume of a mixed solution of diacetone alcohol and hexylene glycol (DAA-HG) as a dispersion medium, and 2.8% by volume of MALIALIM AKM-0531 (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.108.

[Production Example 17]

A pre-dispersed liquid was prepared by mixing 14.5% by volume of the alumina A as a solid content, 82.7% by volume of a mixed solution of N-methyl-2-pyrrolidone and ethylene glycol (NMP-EG) as a dispersion medium, and 2.8% by volume of MALIALIM HKM-150A (manufactured by NOF CORPORATION) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.112.

[Production Example 18]

A pre-dispersed liquid was prepared by mixing 14.5% by volume of the alumina A as a solid content, 82.7% by volume of a mixed solution of N-methyl-2-pyrrolidone and ethylene glycol (NMP-EG) as a dispersion medium, and 2.8% by volume of ISOBAM (manufactured by KURARAY CO., LTD.) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.098.

[Production Example 19]

A pre-dispersed liquid was prepared by mixing 14.5% by volume of the alumina A as a solid content, 82.7% by volume of a mixed solution of water and propylene glycol as a dispersion medium, and 2.8% by volume of ISOBAM (manufactured by KURARAY CO., LTD.) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.085.

[Production Example 20]

A pre-dispersed liquid was prepared by mixing 14.5% by volume of the alumina A as a solid content, 82.7% by volume of a mixed solution of water and propylene glycol as a dispersion medium, and 2.8% by volume of sodium acrylate (Na acrylate) as a dispersant.

From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.073.

[Production Example 21]

A pre-dispersed liquid was prepared by mixing 14.5% by volume of alumina D as a solid content, 82.7% by volume of a mixed solution of ethyl lactate and hexylene glycol (EL-HG) as a dispersion medium, and 2.8% by volume of MALIALIM SC-0708A (manufactured by NOF CORPORATION) as a dispersant.
The alumina D is in a form of a pulverized particle having a primary particle diameter (D50) of 0.5 μm and a specific surface area of 5.6 $g/m^2$.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.069.

[Production Example 22]

A pre-dispersed liquid was prepared by mixing 27.7% by volume of the alumina D as a solid content, 67.0% by volume of a mixed solution of ethyl lactate and hexylene glycol (EL-HG) as a dispersion medium, and 5.3% by volume of MALIALIM SC-0708A (manufactured by NOF CORPORATION) as a dispersant.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.068.

[Production Example 23]

A pre-dispersed liquid was prepared by mixing 14.5% by volume of the alumina D as a solid content, 82.7% by volume of a mixed solution of N-methyl-2-pyrrolidone and hexylene glycol (NMP-HG) as a dispersion medium, and 2.8% by volume of ISOBAM (manufactured by KURARAY CO., LTD.) as a dispersant.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.055.

[Production Example 24]

A pre-dispersed liquid was prepared by mixing 14.5% by volume of the alumina D as a solid content, 82.7% by volume of a mixed solution of water and isopropyl alcohol as a dispersion medium, and 2.8% by volume of sodium acrylate (Na acrylate) as a dispersant.
From this pre-dispersed liquid, a liquid composition was prepared in the same procedure as in Production Example 1. A dispersed state of the particles in this liquid composition was evaluated using the freeze-replica method, and as a result, the liquid composition had a variation coefficient of 0.048.
Lithium ion secondary batteries of Examples 1 to 20 and Comparative Examples 1 to 5 were prepared below.

[Preparation of Negative Electrode]

To form a negative electrode composite layer, an electrode paint was prepared by blending 97 parts by mass of graphite, 1 part by mass of thickener (carboxymethylcellulose), 2 parts by mass of polymer (styrene-butadiene rubber), and 100 parts by mass of water as solvent.
The electrode paint was applied on a copper electrode substrate for a negative electrode and dried to obtain an electrode with both sides on which the negative electrode composite layers were formed such that a coating amount per unit area (area density) on one side was 9 $mg/cm^2$. At this time, the electrode had a thickness of 216 μm and a volume density of 0.91 $g/cm^3$. Next, the electrode was pressed by a roll press machine such that a volume density of the electrode was 1.6 $g/cm^3$, to obtain a negative electrode for use.

[Preparation of Positive Electrode]

After preparing 92 parts by mass of lithium nickel oxide (NCA) as a positive electrode active material, 3 parts by mass of acetylene black as a conductive material, and 5 parts by mass of polyvinylidene fluoride (PVDF) as a binder, they were dispersed in N-methylpyrrolidone (NMP) to prepare a slurry.
This slurry was applied on an aluminum electrode substrate for a positive electrode and then dried to obtain a positive electrode with both sides on which the positive electrode composite layers were formed such that a coating amount per unit area (area density) was 15.0 $mg/cm^2$. Next, the electrode was compression-molded by a roll press

machine such that a volume density of the electrode was 2.8 g/$cm^3$, to obtain a positive electrode composite layer.

[Formation of Insulating Film]

Each of the liquid compositions described in Production Examples 1 to 23 was coated on the negative or positive electrode using the inkjet (Production Examples 1 to 9, 11 to 21, 23, 24) or the bar coater (Production Examples 10, 22) such that a thickness of an insulating film after drying was approximately 5 μm. After the coating, the dispersion medium was volatilized on a hot plate heated to 120°C to form an insulating layer.

In Production Examples 10 and 22, since the liquid composition was too viscous to discharge by the inkjet method because of high solid content, the coating was conducted by bar coating.

<Calculation of Porosity>

An electrode having a porous film was embedded in an epoxy resin and sectioned with a cross section polisher. The obtained cross section of the porous film was imaged using a scanning electron microscope under the following conditions, and a ratio of void portions was calculated using an image analyzing software, and the ratio was defined as a porosity.

Scanning electron microscope: Helios nanolab G3 CX (manufactured by FEI Company)
Observation conditions: acceleration voltage=2 kV, detector=BSE, observation magnification= 10000x
The porosity was evaluated in accordance with the following criteria. Evaluation of the porosity is presented in Table 1.

A: 45% or higher
B: 40% or higher and lower than 45%
C: 30% or higher and lower than 40%
D: lower than 30%

<Preparation of Battery>

Negative or positive electrodes having a insulating layer and the other electrodes having the reverse polarity thereto were alternately laminated via separators to obtain an electrode layered product. The electrode layered product is mounted on a laminate, to which an electrolytic solution (EC:DMC:EC=1 wt%:1wt%:1wt%, $LiPF_6$: 1.5 mol/L, vinylene carbonate (VC): 1%) was injected, and then the inside of the laminate was vacuum-sealed to prepare a lithium ion secondary battery.

<Evaluation of Battery Characteristics>

[Initial Charge and Capacity Confirmation]

A lead wire of the positive electrode and a lead wire of the negative electrode in the prepared battery were coupled to a charge/discharge test device, and the battery was charged at a constant current and a constant voltage with a maximum voltage of 4.2 V and a current rate of 0.2 C for 5 hours. After the charge was completed, the battery was allowed to stand in a thermostatic chamber at 40°C for 5 days.

After that, the battery was discharged at a constant current up to 2.5 V with a current rate of 0.2 C. Subsequently, the battery was charged at a constant current and a constant voltage with a maximum voltage of 4.2 V and a current rate of 0.2 C for 5 hours. After a pause for 10 minutes, the battery was discharged at a constant current up to 2.5 V with a current rate of 0.2 C. A discharged capacity at this time was defined as an initial capacity.

[Output Characteristics]

The lead wire of the positive electrode and the lead wire of the negative electrode in the battery whose initial capacity had been measured as described above were coupled to the charge/discharge test device, and the battery was charged with a maximum voltage of 4.2 V and a current rate of 0.2 C for 5 hours. After a pause for 10 minutes, the battery was discharged at a constant current with a current rate of 0.2 C for 2.5 hours so that the lithium ion battery had a charging depth of 50%.

Next, a pulse with a current rate of 1 to 10 C was discharged for 10 seconds, a power value for the 2.5 V cutoff voltage was calculated from the correlation line between the post-pulse voltage and the current value, and the power value was divided by a cell weight to calculate an output density. To compare the characteristics among the respective

batteries, a battery having electrodes without coating was used as a reference, a ratio of each output density relative to that of the battery without electrode coating was compared to each other.

The output characteristics were evaluated in accordance with the following evaluation criteria. Evaluations of the output characteristics are presented in Table 1.

A: 95% or higher
B: 92% or higher and lower than 95%
C: 90% or higher and lower than 92%
D: lower than 90%

[Cycle Life]

The lead wire of the positive electrode and the lead wire of the negative electrode in the lithium ion battery whose initial capacity had been measured as described above were coupled to the charge/discharge test device, and the battery was charged at a constant current and a constant voltage with a maximum voltage of 4.2 V and a current rate of 1 C for 3 hours. After the charge was completed, the battery was discharged at a constant current up to 2.5 V with a current rate of 1 C. This procedure was repeated 1,000 cycles with interposing a 10-minute pause. Using a discharged capacity at this time as a post-cycle discharged capacity, a cycle capacity maintenance rate (post-cycle discharged capacity/initial discharged capacity×100) was calculated.

<Safety Test>

To evaluate the safety of the battery having the insulating layer, a nail penetration test was performed.

The lead wire of the positive electrode and the lead wire of the negative electrode in the lithium ion battery whose initial capacity had been measured were coupled to the charge/discharge test device, and the battery was charged at a constant current and a constant voltage with a maximum voltage of 4.2 V and a current rate of 1 C for 3 hours so that the lithium ion battery had a charging depth of 100% (full charge). Subsequently, the lithium ion battery was pierced with an iron nail having a diameter of 4.5 mm parallel to the lamination direction of the electrodes to intentionally cause a short circuit, and the state of the lithium ion battery was observed.

The results indicate that the lithium ion batteries in Examples 1 to 20 and Comparative Examples 1 to 5 are highly safe without fuming or ignition.

Table 1

| | Liquid composition | Coating method | Coated electrode | Porosity | Output characteristics |
|---|---|---|---|---|---|
| Example 1 | Production Example 1 | Inkjet | Graphite-based LIB negative electrode | A | B |
| Example 2 | Production Example 1 | Inkjet | Graphite-based LIB positive electrode | A | B |
| Example 3 | Production Example 2 | Inkjet | Graphite-based LIB negative electrode | c | c |
| Example 4 | Production Example 3 | Inkjet | Graphite-based LIB negative electrode | c | c |
| Example 5 | Production Example 4 | Inkjet | Graphite-based LIB negative electrode | A | A |
| Example 6 | Production Example 5 | Inkjet | Graphite-based LIB negative electrode | c | c |
| Example 7 | Production Example 6 | Inkjet | Graphite-based LIB negative electrode | c | c |
| Example 8 | Production Example 8 | Inkjet | Graphite-based LIB negative electrode | B | B |
| Example 9 | Production Example 9 | Inkjet | Graphite-based LIB negative electrode | A | A |

(continued)

| | Liquid composition | Coating method | Coated electrode | Porosity | Output characteristics |
|---|---|---|---|---|---|
| Example 10 | Production Example 10 | Bar coating | Graphite-based LIB negative electrode | A | B |
| Example 11 | Production Example 11 | Inkjet | Graphite-based LIB negative electrode | B | B |
| Example 12 | Production Example 12 | Inkjet | Graphite-based LIB negative electrode | c | c |
| Example 13 | Production Example 13 | Inkjet | Graphite-based LIB negative electrode | c | c |
| Example 14 | Production Example 14 | Inkjet | Graphite-based LIB negative electrode | A | B |
| Example 15 | Production Example 15 | Inkjet | Graphite-based LIB negative electrode | A | B |
| Example 16 | Production Example 16 | Inkjet | Graphite-based LIB negative electrode | B | B |
| Example 17 | Production Example 17 | Inkjet | Graphite-based LIB negative electrode | B | B |
| Example 18 | Production Example 18 | Inkjet | Graphite-based LIB negative electrode | B | B |
| Example 19 | Production Example 19 | Inkjet | Graphite-based LIB negative electrode | c | c |
| Example 20 | Production Example 20 | Inkjet | Graphite-based LIB negative electrode | c | c |
| Comparative Example 1 | Production Example 7 | Inkjet | Graphite-based LIB negative electrode | D | D |
| Comparative Example 2 | Production Example 21 | Inkjet | Graphite-based LIB negative electrode | D | D |
| Comparative Example 3 | Production Example 22 | Bar coating | Graphite-based LIB negative electrode | D | D |
| Comparative Example 4 | Production Example 23 | Inkjet | Graphite-based LIB negative electrode | D | D |
| Comparative Example 5 | Production Example 24 | Inkjet | Graphite-based LIB negative electrode | D | D |

In Table 1, the lithium ion batteries using the liquid compositions having a variation coefficient of 0.07 or larger tended to have higher porosities and showed superior output characteristics (Examples 1 to 20).

In contrast, the lithium ion batteries using the liquid compositions having a variation coefficient of smaller than 0.07 tended to have lower porosities and showed inferior output characteristics (Comparative Examples 1 to 5).

## Claims

**1.** A liquid composition comprising:

particles; and
a dispersion medium,
the liquid composition having a variation coefficient of 0.07 or larger as determined by dividing a standard

deviation of an area ratio of the particles in an arbitrary cross section of the liquid composition by an average value of the area ratio.

2. The liquid composition according to claim 1, wherein a volumetric solid content of the particles is 7.0% by volume or more.

3. The liquid composition according to claim 2, wherein the volumetric solid content is 9.0% by volume or more.

4. The liquid composition according to any one of claims 1 to 3, wherein the variation coefficient is 0.09 or larger.

5. The liquid composition according to any one of claims 1 to 4, wherein the dispersion medium is a non-aqueous dispersion medium.

6. The liquid composition according to any one of claims 1 to 5, wherein the liquid composition further comprises a dispersant.

7. The liquid composition according to claim 6, wherein the dispersant has a polyalkylene chain.

8. The liquid composition according to any one of claims 1 to 7, wherein the particles are inorganic oxide particles.

9. The liquid composition according to claim 8, wherein the inorganic oxide is alumina.

10. The liquid composition according to claim 8, wherein the particles are inorganic phosphate particles.

11. The liquid composition according to claim 10, wherein the inorganic phosphate is a phosphite.

12. The liquid composition according to any one of claims 1 to 11, wherein the liquid composition is used to form an electrode insulating layer.

13. A porous film formed by coating of the liquid composition according to any one of claims 1 to 12.

14. An electrode comprising:

    an electrode composite layer; and
    the porous film according to claim 13 on the electrode composite layer.

15. A power storage element comprising the electrode according to claim 14.

Europäisches Patentamt
European Patent Office
Office européen des brevets

# EUROPEAN SEARCH REPORT

Application Number
EP 22 18 2575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 911785 B2 (TOMOEGAWA PAPER CO LTD) 27 April 2016 (2016-04-27) * paragraphs [0021], [0030], [0031], [0036], [0043] * | 1-6,8,12 | INV. H01M4/13 H01M4/139 H01M50/403 H01M50/431 H01M50/443 H01M50/446 H01M50/414 H01M50/46 |
| X | US 2021/159023 A1 (MATSUOKA KOHJI [JP] ET AL) 27 May 2021 (2021-05-27) | 1,4-9, 12-15 | |
| Y | * paragraphs [0162] - [0168], [0186], [0187] * | 10,11 | |
| Y | US 2016/172682 A1 (MARTIN NELLY [FR] ET AL) 16 June 2016 (2016-06-16) * paragraph [0044] * | 10,11 | |

TECHNICAL FIELDS SEARCHED (IPC)

H01M

The present search report has been drawn up for all claims

1

| Place of search | Date of completion of the search | Examiner |
|---|---|---|
| Munich | 7 December 2022 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 18 2575

This annex lists the patent family members relating to the patent documents cited in the above-mentioned European search report. The members are as contained in the European Patent Office EDP file on
The European Patent Office is in no way liable for these particulars which are merely given for the purpose of information.

07-12-2022

| Patent document cited in search report | Publication date | Patent family member(s) | Publication date |
|---|---|---|---|
| JP 5911785 B2 | 27-04-2016 | JP 5911785 B2 | 27-04-2016 |
| | | JP 2008276205 A | 13-11-2008 |
| | | JP 2013065024 A | 11-04-2013 |
| US 2021159023 A1 | 27-05-2021 | CN 112824460 A | 21-05-2021 |
| | | JP 2021080404 A | 27-05-2021 |
| | | US 2021159023 A1 | 27-05-2021 |
| US 2016172682 A1 | 16-06-2016 | EP 3050140 A1 | 03-08-2016 |
| | | FR 3011391 A1 | 03-04-2015 |
| | | JP 2016532280 A | 13-10-2016 |
| | | US 2016172682 A1 | 16-06-2016 |
| | | WO 2015044550 A1 | 02-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3371301 B